# EUROPEAN PATENT APPLICATION

(11) **EP 2 602 709 A1**
(43) Date of publication of application: **12.06.2013**
(21) Application number: 12195662.7
(22) Date of filing: 05.12.2012
(51) Int. Cl.: G06F 3/14, G09G 5/14

(54) **Method and apparatus for controlling displays in mobile terminal**

(30) Priority: 05.12.2011 KR 20110128976
(71) Applicant: Samsung Electronics Co., Ltd, Gyeonggi-do 443-742 (KR)
(72) Inventor: Joo, Sang-Woo, Gyeonggi-do 443-742 (KR)
(74) Representative: Bottema, Johan Jan

(57) **Abstract**

An apparatus performs a method to control displays in a mobile terminal including a first display and a second display positioned over the first display. In the method, first information whose output via the first display is allowed and second information whose output via the second display is allowed are identified using output information. The first information is output via the first display. The second information is output via the second display.

## Description

### TECHNICAL FIELD OF THE INVENTION

The present disclosure relates to a display of a mobile terminal, and specifically, to a method for controlling displays in a mobile terminal and an apparatus thereof.

### BACKGROUND OF THE INVENTION

Recently, due to developments of electronic communication industries, a mobile terminal has become a necessity of a modem society and serves as an important means for transferring information that changes quickly. Many mobile terminals include a high quality display to display a Graphic User Interface (GUI) system.

However, when outputting some types of information, the use of the display is inefficient. For example, text can be sufficiently output to a user via a low power display. It is inefficient to output the text via a relatively high power and high quality display.

### SUMMARY OF THE INVENTION

To address the above-discussed deficiencies of the prior art, it is a primary object to provide at least the advantages described below. Accordingly, an aspect of the present disclosure is to provide a method and an apparatus for controlling a plurality of stacked displays.

Another aspect of the present disclosure is to provide a method and an apparatus for controlling displays such that information output via a plurality of stacked displays appears overlapped to a user.

Still another aspect of the present disclosure is to provide a method and an apparatus for controlling displays, for selecting a display suitable for a type (for example, moving pictures, photos, text, and the like) of output information among a plurality of displays, and outputting the output information via the selected display.

In accordance with an aspect of the present disclosure, a method for controlling displays in a mobile terminal including a first display and a second display positioned over the first display is provided. The method includes identifying first information whose output via the first display is allowed and second information whose output via the second display is allowed using output information. The method also includes outputting the first information via the first display, and outputting the second information via the second display.

In accordance with another aspect of the present disclosure, an apparatus for controlling displays is provided. The apparatus includes an input unit configured to output a control signal, a storage configured to store data, and a display unit including a first display and a second display positioned over the first display. The apparatus also includes a controller configured to load output information corresponding to the control signal received from the input unit from the storage, identify first information whose output via the first display is allowed and second information whose output via the second display is allowed using the output information, and output the first information via the first display and the second information via the second display.

Other aspects, advantages and salient features of the disclosure will become apparent to those skilled in the art from the following detailed description, which, taken in conjunction with the annexed drawings, discloses exemplary embodiments of the disclosure.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts. The above and other aspects, features and advantages of certain exemplary embodiments of the present disclosure will be more apparent from the following description taken in conjunction with the accompanying drawings in which:

FIG. 1 is a block diagram illustrating a mobile terminal according to an embodiment of the present disclosure;

FIG. 2 is a flowchart illustrating a procedure for controlling displays according to an embodiment of the present disclosure;

FIG. 3 is a view illustrating the construction of a display unit according to an embodiment of the present disclosure; and

FIGS. 4 and 5 are views illustrating a user interface according to an embodiment of the present disclosure.

Throughout the drawings, like reference numerals will be understood to refer to like parts, components and structures.

### DETAILED DESCRIPTION OF THE INVENTION

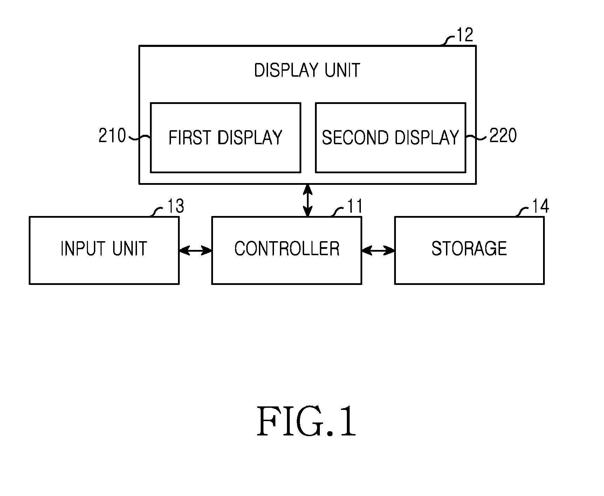

FIGURES 1 through 5, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless device. The following description with reference to the accompanying drawings is provided to assist in a comprehensive understanding of exemplary embodiments of the disclosure as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the disclosure. Also, descriptions of well-known functions and constructions are omitted for clarity and conciseness.

The terms and words used in the following description and claims are not limited to the bibliographical meanings, but are merely used by the inventor to enable a clear and consistent understanding of the disclosure. Accordingly, it should be apparent to those skilled in the art that the following description of exemplary embodiments of the present disclosure are provided for illustration purposes only and not for the purpose of limiting the disclosure as defined by the appended claims and their equivalents.

Embodiments of the present disclosure provide a mobile terminal having a plurality of stacked displays and provide a display control method and an apparatus thereof that allow information output via respective displays to look overlapped to a user.

An embodiment of the present disclosure outputs output information via a display suitable for a type (for example, moving pictures, photos, text, and the like) of the output information. Particularly, an embodiment of the present disclosure identifies information allowed for each display using the output information and outputs each identified information via each display.

FIG. 1 is a block diagram illustrating a mobile terminal according to an embodiment of the present disclosure.

Referring to FIG. 1, the mobile terminal includes a controller 11, a display unit 12, an input unit 13, and a storage 14.

The controller 11 sets an execution configuration of the terminal, maintains information thereof, allows the terminal to be operated stably, and allows data input/output exchange of all units of the terminal to be swiftly performed. In addition, the controller 11 may include a codec for converting a signal regarding an image via the display unit 12.

The display unit 12 displays output information received from the controller 11 as an image. The display unit 12 includes a plurality of stacked displays. Information output via the plurality of stacked displays appears overlapped to a user. Particularly, an uppermost display of the display unit 12 may be transparent, and therefore, the user may view information of a display positioned under the uppermost display. For example, the uppermost display of the display unit 12 may be an Electro Wetting Display (EWD) or an E-paper. The EWD or E-paper does not use a light source or a polarizer and so has a high transparency. Furthermore, the display unit 12 may further include a touch panel to provide a touch-based user interface under control of the controller 11. Hereinafter, it is assumed that the display unit 12 includes a first display and a second display stacked on (i.e., positioned over) the first display.

The input unit 13 outputs a control signal input by a user to the controller 11. The controller 11 loads output information corresponding to the control signal from the storage 14.

The storage 14 stores data regarding an operation of the terminal, and the controller 11 loads information from the storage 13 to perform an operation according to the present disclosure.

In an embodiment, the controller 11 identifies information allowing an output via each display using the output information. The controller 11 outputs the identified information via a relevant display, and determines a region outputting the identified information. Hereinafter, a display control method of the controller 11 according to the present disclosure is described with reference to the drawing.

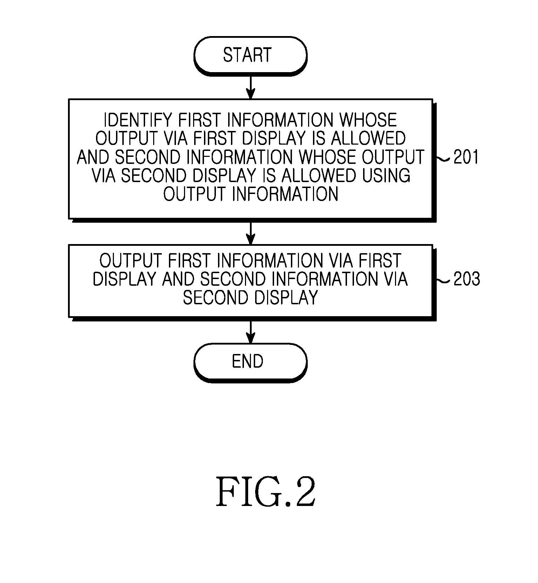

FIG. 2 is a flowchart illustrating a procedure for controlling displays according to an embodiment of the present disclosure.

Referring to FIG. 2, the controller 11 identifies first information whose output via the first display is allowed and second information whose output via the second display is allowed using the output information in block 201. For example, the controller 11 may identify the first information and the second information with reference to metadata regarding the output information. The metadata includes a type of information, content, information regarding a writer, a rights condition, a use condition, a use history, and the like.

The controller 11 outputs the first information via the first display and outputs the second information via the second display in block 203.

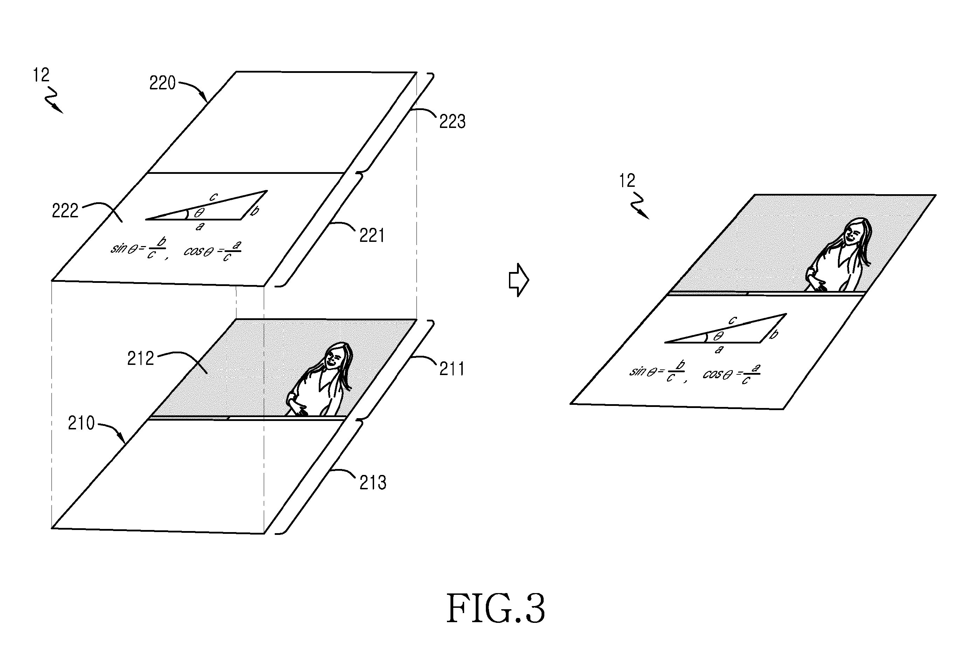

The controller 11 determines a region that outputs the first information and a region that does not output the first information, and outputs the first information. In addition, the controller 11 determines a region that outputs the second information and a region that does not output the second information, and outputs the second information. Particularly, the controller 11 processes the region that does not output the second information as transparent. In addition, the controller 11 determines a region that overlaps the region of the second display that does not output the second information, and outputs the first information via the determined region. Consequently, a user may view the first information of the first display via the transparent region of the second display that does not output the second information. Hereinafter, a construction that allows the controller 11 to output the first information via the first display and output the second information via the second display is described with reference to FIGS. 3 to 6.

FIG. 3 is a view illustrating the construction of a display unit according to an embodiment of the present disclosure.

Referring to FIG. 3, the display unit 12 includes a first display 210, and a second display 220 positioned over the first display 210. The controller 11 identifies moving picture information 212 whose output via the first display 210 is allowed and text information 222 whose output via the second display 220 is allowed using output information. The controller 11 determines a region 211 that outputs the moving picture information 212 and a region 213 that does not output the moving picture information 212. In addition, the controller 11 determines a region 221 that outputs the text information 222 and a region 223 that does not output the text information 222. Particularly, the controller 11 processes the region 223 of the second display 220 that does not output the text information 222 as transparent. For example, the EWD becomes transparent when a current is blocked.

Furthermore, the controller 11 determines a region of the first display 210 that overlaps the transparent region 223 of the second display 220 as the region 211 that outputs the moving picture information. Consequently, the display unit 12 according to the present disclosure allows the moving picture information 212 of the first display 210 and the text information 222 of the second display 220 to look overlapped to a user.

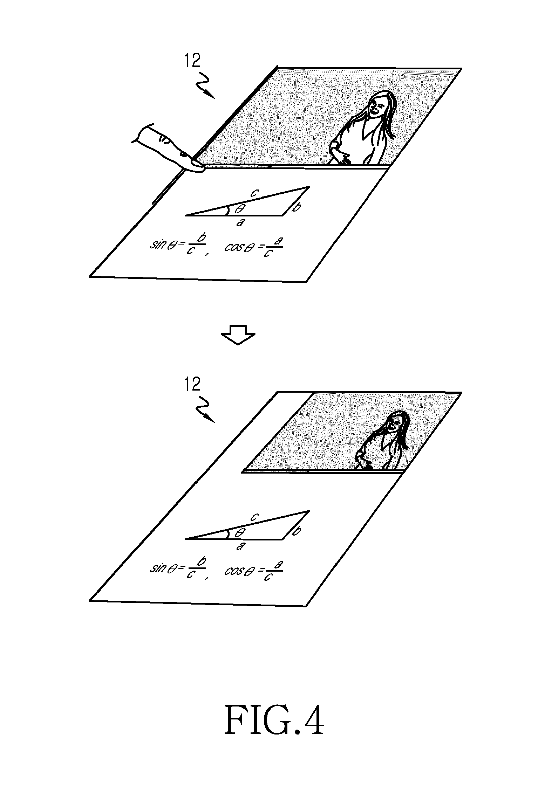

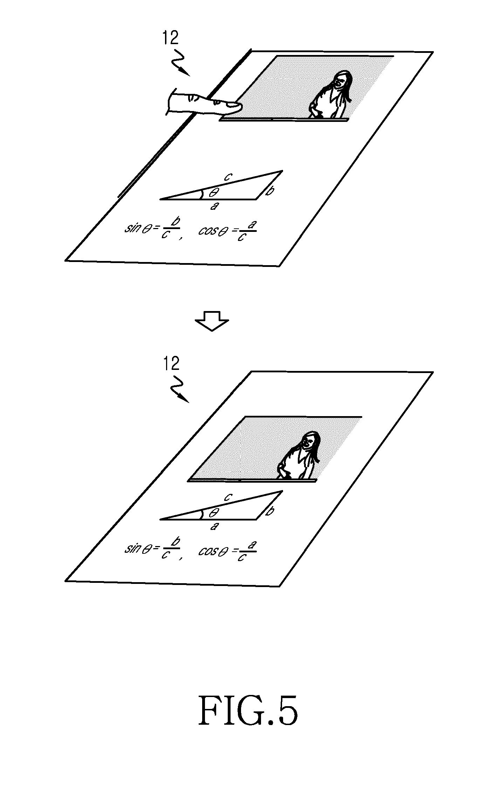

In addition, when changing the region 221 that outputs the text information 222 of the second display 220, the controller 11 changes the region 211 that outputs the moving picture information 212 of the first display 210. Alternatively, when changing the region 211 that outputs the moving picture information 212 of the first display 210, the controller 11 changes the region 221 that outputs the text information 222 of the second display 220. This user interface may be realized using a touch panel additionally configured in the display unit 12. FIGS. 4 and 5 show that the size and position of respective regions 211, 213, 221, 223 are changed by a user's touch event (for example, a drag).

Furthermore, the controller 11 may inactivate the region 213 of the first display 210 that does not output the moving picture information 212. For example, a Liquid Crystal Display (LCD) includes a backlight. In the situation where a portion of the backlight corresponding to the region 213 that does not output the moving picture information 212 is not operated, the region 213 that does not output the moving picture information 212 is inactivated. In addition, when a current of the region 213 that does not output the moving picture information 212 is blocked, a self luminous display such as an Organic Light-Emitting Diode (OLED) inactivates the region 213 that does not output the moving picture information 212.

Furthermore, in the situation where the first information does not exist, the controller 11 may inactivate the first display 210. For example, when a current to the first display 210 is blocked, the first display 210 is not operated.

Furthermore, in the situation where the second information does not exist, the controller 11 processes the second display 220 as transparent. For example, when a current to an EWD is blocked, the EWD is not operated and becomes transparent.

The first display 210 may be a display that may not be processed as transparent as the second display 220. The first display 210 may be one of an EWD, an E-paper, a Plasma Display Panel (PDP), a Liquid Crystal Display (LCD), an Organic Light-Emitting Diode (OLED), and an Active Matrix Organic Light-Emitting Diode (AMOLED).

Consequently, a method and an apparatus for controlling displays in a mobile terminal according to the present disclosure use a display suitable for a type (for example, moving pictures, photos, text, and the like) of output information among a plurality of displays, so that it is efficient.

Although the disclosure has been shown and described with reference to certain exemplary embodiments thereof, it will be understood by those skilled in the art that various changes in form and details may be made therein without departing from the spirit and scope of the disclosure as defined by the appended claims and their equivalents. Therefore, the scope of the present disclosure should not be limited to the above-described embodiments but should be determined by not only the appended claims but also the equivalents thereof.

It will be appreciated that embodiments of the present invention according to the claims and description in the specification can be realized in the form of hardware, software or a combination of hardware and software.

Any such software may be stored in a computer readable storage medium. The computer readable storage medium stores one or more programs (software modules), the one or more programs comprising instructions, which when executed by one or more processors in an electronic device, cause the electronic device to perform a method of the present invention.

Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program.

## Claims

1. A method for controlling displays in a mobile terminal comprising a first display and a second display positioned over the first display, the method comprising:
identifying first information whose output via the first display is allowed and second information whose output via the second display is allowed using output information;
outputting the first information via the first display; and
outputting the second information via the second display.

2. The method of claim 1, wherein the outputting of the first information via the first display comprises determining a region configured to output the first information and a region not configured to output the first information.

3. The method of claim 2, wherein the outputting of the first information via the first display comprises inactivating the region not configured to output the first information.

4. The method of claim 1, further comprising, when the first information does not exist, inactivating the first display.

5. The method of claim 1, wherein the outputting of the second information via the second display comprises:
determining a region configured to output the second information and a region not configured to output the second information, and processing the region not configured to output the second information as transparent.

6. The method of claim 5, wherein the outputting of the first information via the first display comprises:
determining a region configured to output the first information and a region not configured to output the first information,
wherein a region that overlaps the region not configured to output the second information is determined as the region configured to output the first information.

7. The method of claim 6, wherein:
the outputting of the first information via the first display comprises, when changing the region configured to output the second information, changing the region configured to output the first information, and
the outputting of the second information via the second display comprises, when changing the region configured to output the first information, changing the region configured to output the second information.

8. The method of claim 1, further comprising, when the second information does not exist, processing the second display as transparent.

9. The method of claim 1, wherein identifying first information whose output via the first display is allowed and second information whose output via the second display is allowed using output information comprises:
identifying the first information and the second information with reference to meta data of the output information.

10. The method of claim 9, wherein the first information corresponds to a moving picture or a photo, and the second information corresponds to text.

11. The method of claim 1, wherein the second display comprises one of an Electro Wetting Display (EWD) and an E-paper.

12. The method of claim 1, wherein the first display comprises one of an EWD, an E-paper, a Plasma Display Panel (PDP), a Liquid Crystal Display (LCD), an Organic Light-Emitting Diode (OLED), and an Active Matrix Organic Light-Emitting Diode (AMOLED).

13. An apparatus for controlling displays in which the method in any one of claims 1 to 14 are performed.
